# EUROPÄISCHE PATENTSCHRIFT

(11) **EP 1 428 696 B1**
(45) Veröffentlichungstag und Bekanntmachung des Hinweises auf die Patenterteilung: **11.05.2005**
(21) Anmeldenummer: 03026713.2
(22) Anmeldetag: 21.11.2003
(51) Int. Cl.: B60D 1/46

(54) **Anhängerkupplung für ein Fahrzeug**
Trailer hitch
Dispositif d'attelage

(30) Priorität: 09.12.2002 DE 10257595
(43) Veröffentlichungstag der Anmeldung: 16.06.2004
(73) Patentinhaber: Sauermann, Hans, D-86558 Freinhausen (DE)
(72) Erfinder: Sauermann, Hans, D-86558 Freinhausen (DE)
(74) Vertreter: Witzany, Manfred, Dipl.-Phys., Dr.

(56) Entgegenhaltungen:
- WO-A-90/06240
- FR-A- 1 237 137
- GB-A- 1 345 472

## Beschreibung

Die Erfindung betrifft eine Anhängerkupplung für ein Fahrzeug, insbesondere für einen Ackerschlepper, gemäß dem Oberbegriff des Patentanspruchs 1.

Aus der EP 0 695 655 A1 ist eine gattungsgemäße Anhängerkupplung für einen Ackerschlepper bekannt. Diese Anhängerkupplung weist einen fest mit dem Ackerschlepper verbundenen Rahmen auf, der von einer Schwenkachse durchsetzt ist. Auf dieser Schwenkachse ist ein wannenartig ausgebildeter Schwenkarm gelagert, in dem ein Kupplungsglied längsverschiebbar gehalten ist. Der Schwenkarm und das Kupplungsglied sind über Hydraulikzylinder verstellbar. Zur Verriegelung des Kupplungsglieds ist ein Bolzen quer durch die Anhängerkupplung steckbar, der das Kupplungsglied mit dem Schwenkarm und dem Rahmen verblockt. Diese Anhängerkupplung hat sich in der Praxis gut bewährt und dient als Ausgangspunkt der vorliegenden Erfindung.

Der Erfindung liegt die Aufgabe zugrunde, eine Anhängerkupplung der eingangs genannten Art zu schaffen, die eine zuverlässige und einfach zu bedienende Verriegelung gewährleistet.

Diese Aufgabe wird erfindungsgemäß mit den Merkmalen des Patentanspruchs 1 gelöst.

Die Anhängerkupplung gemäß Anspruch 1 ist für ein Fahrzeug, insbesondere für einen Ackerschlepper vorgesehen. Es handelt sich dabei um eine sogenannte Hitch, die insbesondere ein leichtes Ankuppeln von Anhängern mit schweren Deichseln ermöglicht. Diese Anhängerkupplung weist einen fest mit dem Fahrzeug verbundenen Rahmen auf, der vorzugsweise mit dem Fahrzeugboden unterseitig verschraubt ist. An diesem Rahmen ist ein nach hinten gerichteter Schwenkarm gehalten, der zwischen einer nahe dem Boden abgesenkten Ankuppelstellung und einer im wesentlichen parallel zum Rahmen angehobenen Transportstellung verschwenkbar ist. An diesem Schwenkarm ist ein Kupplungsglied längs zu diesem verschiebbar gehalten. Das Kupplungsglied selbst kann dabei in unterschiedlichster Weise beschaffen sein, wobei insbesondere an Haken-, Bolzen- oder Kugelkopfkupplungen bzw. Pitons gedacht ist. In einer abgesenkten Ankuppelstellung befindet sich das Kupplungsglied in einer nach hinten ausgefahrenen Stellung, so daß ein Anhänger auch bei etwas größerem Abstand zum Zugfahrzeug leicht angekuppelt werden kann. In der Transportstellung ist das Kupplungsglied weitestgehend nach vorne in den Arm zurückgezogen, so daß während der Fahrt ein kurzer Kuppelabstand gewährleistet ist. Während der Fahrt, insbesondere im Straßenverkehr ist es wichtig, daß die Anhängerkupplung, insbesondere der Schwenkarm und das Kupplungsglied zuverlässig in der angehobenen Transportstellung verriegelt sind. Zu diesem Zweck ist am Kupplungsglied bzw. am Schwenkarm mindestens ein Fortsatz vorgesehen, der von mindestens einem Stützhaken untergreifbar ist. Um das Kupplungsglied auch bezüglich seiner Verschiebbarkeit relativ zum Schwenkarm ausreichend sicher zu verriegeln, weist es ein Widerlager auf, welches in der Verriegelungsstellung von einem Sperrhaken hintergriffen ist. Zur Erzielung einer einfachen Bedienung der Anhängerkupplung ist der Sperrhaken zusammen mit dem Stützhaken über eine Welle drehfest verbunden. Damit können der Stützhaken und der Sperrhaken durch Drehen der Welle gemeinsam zwischen der Verriegelungsstellung und der Lösestellung verschwenkt werden.

Die Welle ist gemäß Anspruch 2 derart im Rahmen der Anhängerkupplung abgestützt, daß sie sich in etwa oberhalb des Fortsatzes des Kupplungsgliedes bzw. Schwenkarmes befindet. Auf diese Weise ist sichergestellt, daß die nach unten gerichtete Stützlast der Anhängerkupplung zuverlässig vom Stützhaken aufgenommen wird. Durch die gewählte Anordnung der Welle ist außerdem gewährleistet, daß der Stützhaken nur in radialer Richtung belastet ist, in der der Haken die größte Belastbarkeit aufweist. Insbesondere führt die auf den Haken wirkende Kraft nicht zu einer unbeabsichtigten Verstellung und damit zu einem Lösen der Verriegelung der Anhängerkupplung. Vorzugsweise sind zwei außenseitige Stützhaken vorgesehen, die jeweils einen Fortsatz des Schwenkarms untergreifen. Die Welle ist derart im Rahmen der Anhängerkupplung abgestützt, daß sie sich in etwa vor dem Widerlager des Kupplungsgliedes beifindet. Auf diese Weise ist sichergestellt, daß die nach hinten gerichtete Zuglast vom Sperrhaken der Anhängerkupplung zuverlässig aufgenommen wird. Durch die gewählte Anordnung der Welle ist außerdem gewährleistet, daß der Sperrhaken nur in radialer Richtung belastet ist, in der der Haken die größte Belastbarkeit aufweist. Insbesondere führt die auf den Haken wirkende Kraft nicht zu einer unbeabsichtigten Verstellung und damit zu einem Lösen der Verriegelung der Anhängerkupplung. Vorzugsweise ist ein mittiger Sperrhaken vorgesehen, der sich zwischen den beiden außenseitigen Stützhaken befindet. Um den Fortsatz leicht durch Verdrehen der Welle mit dem Sperr- bzw. Stützhaken verriegeln zu können, sind der Sperr- und Stützhaken vorzugsweise um ca. 90° gegeneinander verdreht auf der Welle angeordnet.

Zur weiteren Verbesserung der Verriegelung der Anhängerkupplung ist es gemäß Anspruch 3 günstig, wenn der Stütz- bzw. Sperrhaken eine Hinterschneidung aufweist. Diese Hinterschneidung bewirkt eine zusätzliche Arretierung der Welle in der Verriegelungsstellung, da auf das Kupplungsglied wirkende Zug- und Stützkräfte die Welle in Richtung der Verriegelungsstellung belasten. Zur Überführung der Welle in die Lösestellung wird in diesem Fall der Schwenkarm mittels einer hierfür vorgesehenen Verstelleinrichtung, insbesondere in Form von Hydraulikzylindern angehoben, so daß die Sperr- und Stützhaken zum Fortsatz bzw. Widerlager eine Lage einnehmen, in der die Hinterschneidung nicht mehr wirkt. Damit kann die Verriegelung trotz der Hinterschneidungen sehr einfach gelöst werden.

Zur weiteren Verbesserung der Verriegelungswirkung ist es gemäß Anspruch 4 günstig, wenn das Kupplungsglied federnd gegen den Stütz- bzw. Sperrhaken vorgespannt ist. Vorzugsweise wirkt das Kupplungsglied mit Gummipuffern zusammen, die die erforderliche Vorspannung erzeugen. Insbesondere bei zusätzlicher Ausbildung der Stütz- bzw. Sperrhaken mit einer Hinterschneidung ergibt sich eine besonders sichere Verriegelung der Anhängerkupplung.

Besitzt das Kupplungsglied in der Transportstellung noch eine gewisse Bewegungsfreiheit, so ergibt sich das Problem, daß vom Anhänger Stöße auf das Zugfahrzeug übertragen werden können. Diese Stöße verschlechtern den Fahrkomfort erheblich. Ist das Kupplungsglied dagegen gemäß Anspruch 5 durch einen einstellbaren Anschlag des Schwenkarms arretiert, so kann das vom Kupplungsglied nutzbare Spiel minimiert werden, wodurch auch die vom Anhänger hervorgerufenen Stöße klein bleiben.

Um eine einfache Bedienung der Anhängerkupplung zu erzielen, ist es gemäß Anspruch 6 günstig, wenn die Welle federnd gegen die Verriegelungsstellung vorgespannt ist. Zum Überführen der Welle in die Lösestellung ist es daher nur noch erforderlich, eine einfach wirkende Kraft, insbesondere eine Zugkraft auf die Welle auszuüben. Insbesondere ist es auf diese Weise sehr einfach möglich, die Welle mittels eines Bowdenzugs zu verstellen. Steht die Welle mit einem Bowdenzug in Wirkverbindung, so ist eine sehr einfache Überführung der Anhängerkupplung in die Verriegelungs- bzw. Lösestellung vom Fahrersitz des Fahrzeugs aus möglich.

Eine besonders einfache Bedienung der Anhängerkupplung ergibt sich aus Anspruch 7. Dabei wird die Welle in der Lösestellung durch einen Stift arretiert, so daß der Schwenkarm und das Kupplungsglied ohne jegliche Behinderung durch den Stütz- bzw. Sperrhaken verstellbar sind. Dieser Stift steht über ein Getriebe mit dem Kupplungsglied in Wirkverbindung, so daß beim Zurückziehen des Kupplungsglieds in den Schwenkarm die Welle durch den Stift freigegeben wird. Durch diesen besonderen Mechanismus ist gewährleistet, daß die Anhängerkupplung selbsttätig verriegelt wird, wenn das Kupplungsglied in die Transportstellung verstellt wird. Ein zusätzliches manuelles Auslösen des Verriegelungsvorgangs ist demnach entbehrlich. Dies erhöht zum einen die Sicherheit der Anhängerkupplung und erlaubt andererseits eine besonders einfache Bedienung.

Eine einfache und gleichzeitig wirkungsvolle Realisierung des Getriebes ergibt sich aus Anspruch 8. Dabei ist am Kupplungsglied eine Keilfläche vorgesehen, gegen die der Stift federnd vorgespannt ist. Beim Zurückziehen des Kupplungsglieds wird der Stift in seiner Längsrichtung aufgrund seiner Anlage an der Keilfläche verschoben. Die Keilfläche und der Stift sind dabei derart ausgebildet, daß der Stift bei ausgefahrenem Kupplungsglied eine Anschlagfläche des Stütz- bzw. Sperrhakens hintergreift. Vorzugsweise weist der Stütz- bzw. Sperrhaken eine Ausnehmung oder Vertiefung auf, in die der Stift eingreifen kann. Insbesondere ist auch daran gedacht, das freie Ende des Stiftes konisch oder ballig auszubilden, damit der Stift beim Überführen der Welle in die Lösestellung vom Stütz- bzw. Sperrhaken zurückgedrückt wird. Anschließend kann der Stift in die vorgenannte Aussparung oder Vertiefung einrasten, um die Welle zu arretieren.

Befinden sich die Verriegelungsmittel beim Überführen der Anhängerkupplung von der Ankuppelstellung in die Transportstellung in ihrer Verriegelungslage, so ergibt sich das Problem, daß die Sperr- und Stützhaken die Verstellung des Schwenkarms bzw. des Kupplungsglieds behindern könnten. Zu diesem Zweck weist das Kupplungsglied gemäß Anspruch 9 eine Schrägfläche auf, die mit dem Sperrhaken zusammenwirkt. Der Sperrhaken wird beim Zurückziehen des Kupplungsglieds in die Transportstellung durch diese Schrägfläche verschwenkt, bis er in die Lösestellung überführt ist. Sobald das Kupplungsglied vollständig eingezogen ist, verstellen sich die Verriegelungsmittel vorzugsweise durch Federwirkung selbsttätig in die Verriegelungsstellung. Um zu verhindern, daß sich der Sperrhaken an der Schrägfläche verhakt, ist es günstig, wenn diese Schrägfläche mit einem Gleitbelag versehen ist.

Schließlich ist es gemäß Anspruch 10 vorteilhaft, wenn die Welle mit einem die Verriegelungsstellung anzeigenden Kontrollstift in Wirkverbindung steht. Eine bedienende Person kann sehr einfach anhand der Lage des Kontrollstiftes erkennen, ob die Anhängerkupplung, ordnungsgemäß verriegelt ist.

Der Erfindungsgegenstand wird beispielhaft anhand der Zeichnung erläutert, ohne den Schutzumfang zu beschränken.

Es zeigt:
- Figur 1: eine räumliche Darstellung einer Anhängerkupplung in der Ankuppelstellung,
- Figur 2: die Anhängerkupplung gemäß Figur 1 in entriegelter Transportstellung,
- Figur 3: die Anhängerkupplung gemäß Figur 2 in verriegelter Transportstellung und
- Figur 4: eine räumliche Darstellung einer Arretiervorrichtung für die Verriegelungsmittel.

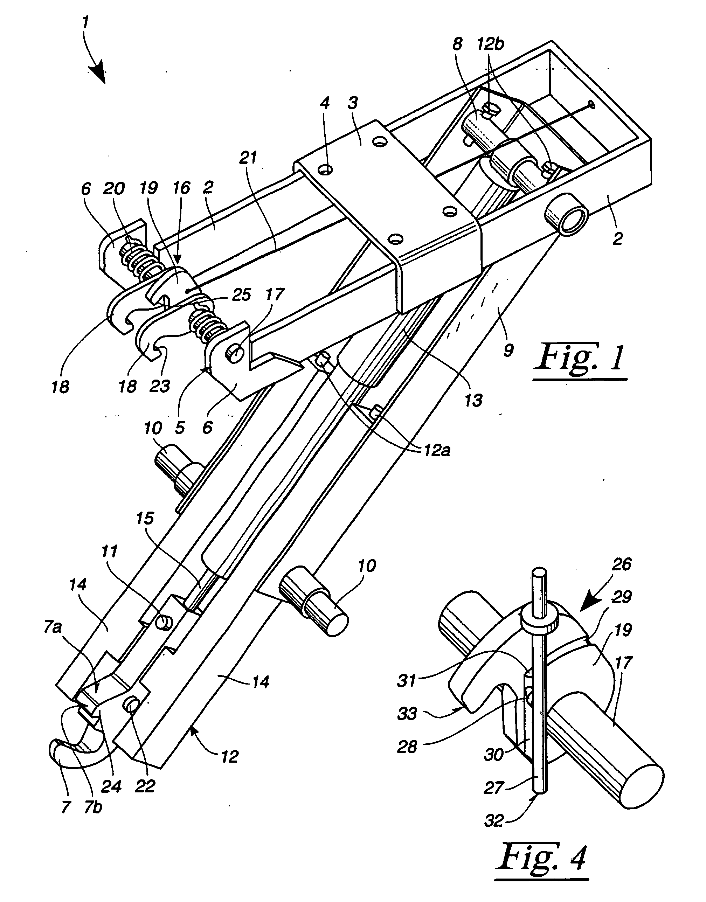

Eine Anhängerkupplung 1 gemäß Figur 1 weist einen Rahmen 2 auf, der mit einer Verbindungsplatte 3 an einem nicht dargestellten Fahrzeug bodenseitig festgelegt ist. Zur Festlegung der Anhängerkupplung 1 am Fahrzeug weist die Verbindungsplatte 3 Bohrungen 4 auf, die von nicht dargestellten Schrauben durchsetzt sind. An einem heckseitigen Ende 5 sind am Rahmen beidseitig Wangen 6 angeschweißt. An diesen Wangen 6 ist eine nicht dargestellte Rückwand festgelegt, die insbesondere Sicherungsmittel für die Anhängerkupplung 1 aufweist. Diese Sicherungsmittel drücken eine Anhängerdeichsel gegen ein Kupplungsglied 7, um eine sichere Verbindung zwischen der Anhängerkupplung 1 und der Anhängerdeichsel zu erzielen.

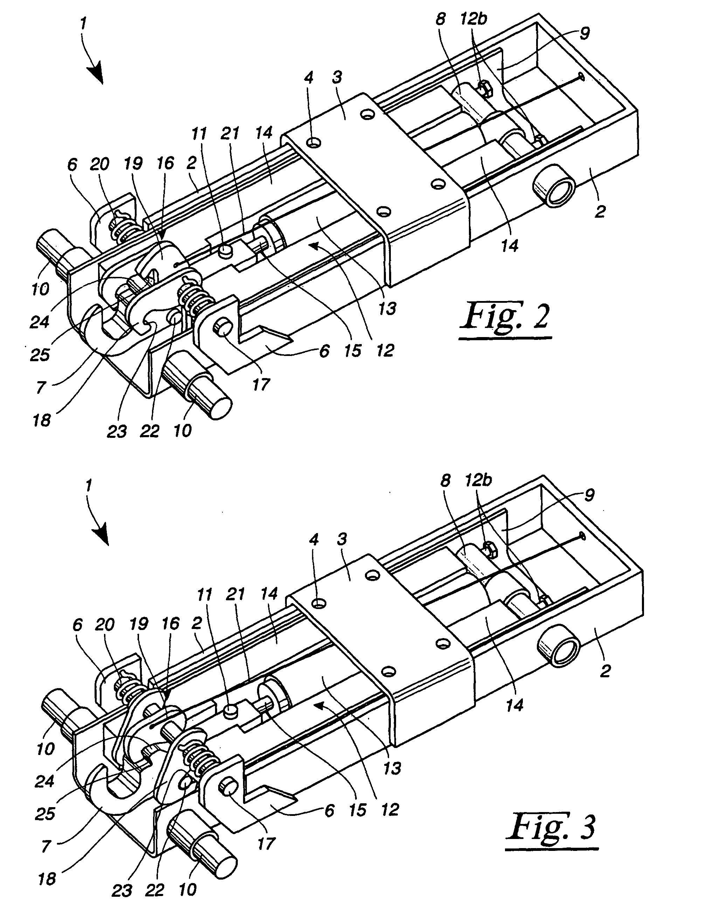

Im Rahmen 2 ist eine Achse 8 verschwenkbar gehalten, auf der ein Schwenkarm 9 abgestützt ist. Der Schwenkarm 9 ist in Form einer Wanne ausgebildet, die oberseitig durch eine Deckplatte verschlossen ist. Diese Deckplatte ist nicht dargestellt, um die Einbauten im Schwenkarm sehen zu können. Außenseitig ist am Schwenkarm 9 beidseits je ein Haltebolzen 10 angeschweißt, an denen nicht dargestellte Hydraulikzylinder angreifen. Diese Hydraulikzylinder dienen zum Verstellen des Schwenkarms 9 zwischen der in Figur 1 dargestellten Ankuppelstellung und der in Figur 2 dargestellten Transportstellung. In der Ankuppelstellung ist der Schwenkarm heckseitig im spitzen Winkel nach unten abgesenkt, so daß das Kupplungsglied 7 zur Erleichterung des Ankuppelvorgangs der Anhängerdeichsel möglichst tief liegt.

In der Regel reicht die durch den Schwenkarm 9 erzielbare Verstellung des Kupplungsgliedes 7 nicht aus, um ein einfaches Ankuppeln der Anhängerdeichsel zu ermöglichen. Aus diesem Grund ist das Kupplungsglied 7 über einen Bolzen 11 an einem Schiebeschlitten 12 festgelegt. Dieser Schiebeschlitten 12 ist längs zum Schwenkarm 9 verschiebbar gehalten.

Am Schiebeschlitten 12 sind endseitig Gummipuffer 12a vorgesehen, die in zurückgezogener Lage des Schiebeschlittens 12 eine Vorspannung erzeugen. Diese Gummipuffer 12a wirken mit Schraubbolzen 12b zusammen, die einen verstellbaren Anschlag für den Schiebeschlitten 12 bilden. Die Gummipuffer 12a drücken das Kupplungsglied 7 geringfügig gegen das heckseitige Ende 5 des Rahmens 2. Zusätzlich sind unter der Verbindungsplatte 3 weitere, nicht dargestellte Gummipuffer vorgesehen. Diese Gummipuffer drücken den Schwenkarm 9 geringfügig nach unten.

Im Schwenkarm 9 ist außerdem ein Hydraulikzylinder 13 gehalten, der endseitig an der Achse 8 abgestützt ist. Dieser Hydraulikzylinder 13 greift zwischen zwei Backen 14 des Schiebeschlittens 12. Eine Kolbenstange 15 des Hydraulikzylinders 13 ist über den Bolzen 11 mit dem Kupplungsglied 7 bzw. dem Schiebeschlitten 12 verbunden. Mit Hilfe des Hydraulikzylinders 13 kann das Kupplungsglied 7 zusammen mit dem Schiebeschlitten 12 in die in Figur 1 dargestellte Ankuppelstellung ausgefahren werden. Auf diese Weise wird erreicht, daß das Kupplungsglied 7 in der Ankuppelstellung auf dem Boden aufliegt.

Dadurch wird das Aufnehmen einer auf den Boden abgesenkten Anhängerdeichsel erheblich erleichtert, zumal diese zur Durchführung des Ankuppelvorgangs nicht von Hand angehoben werden muß. Es genügt vielmehr, die Anhängerdeichsel in das Kupplungsglied 7, das im Ausführungsbeispiel gemäß Figur 1 hakenförmig ausgebildet ist, einzulegen. Anschließend kann das Kupplungsglied 7 einfach mit Hilfe des Hydraulikzylinders 13 in den Schwenkarm 9 zurückgezogen und dieser in den Rahmen 2 eingeschwenkt werden. Die Anhängerkupplung wird dabei in die in Figur 2 dargestellte Transportstellung überführt.

Insbesondere beim Betrieb der Anhängerkupplung 1 im öffentlichen Straßenverkehr ist es wichtig, daß die Anhängerkupplung 1 in der in Figur 2 dargestellten Transportstellung verbleibt. Hierzu ist es insbesondere erforderlich, daß diese Stellung unabhängig von den Druckverhältnissen in den Hydraulikzylindern eingehalten wird. Zu diesem Zweck weist die Anhängerkupplung 1 Verriegelungsmittel 16 auf, die anhand der Figuren 1 bis 3 näher erläutert werden.

Die Verriegelungsmittel 16 weisen eine Welle 17 auf, die in entsprechenden Bohrungen der Wangen 6 verdrehbar abgestützt ist. Auf dieser Welle 17 sind zwei Stützhaken 18 und ein Sperrhaken 19 drehfest abgestützt. Die Stützhaken 18 und der Sperrhaken 19 sind daher nur gemeinsam mit der Welle 17 verdrehbar. An den beiden Stützhaken 18 greifen Drehfedern 20 an, die die Welle 17 in die in Figur 3 dargestellte Verriegelungsstellung vorspannen. In der in Figur 2 dargestellten Lösestellung nehmen die Stütz- 18 und der Sperrhaken 19 eine Lage ein, in der sie die Verstellung des Schwenkarms 9 und des Kupplungsglieds 7 in keiner Weise behindern. In der Lösestellung der Verriegelungsmittel 16 läßt sich demnach die Anhängerkupplung 1 in die Ankuppelstellung überführen.

Am Sperrhaken 19 greift außerdem ein Bowdenzug 21 an, der auf den Sperrhaken 19 eine Zugkraft ausüben kann. Durch diese Zugkraft wird die Welle 17 in die in Figur 2 dargestellte Lösestellung der Verriegelungsmittel 16 überführt.

Am Kupplungsglied 7 sind beidseitig Fortsätze 22 angeschweißt, die in der in Figur 3 dargestellten Verriegelungslage von den Stützhaken 18 untergriffen sind. Diese Fortsätze 22 sind dabei derart angeordnet, daß sie sich in etwa unterhalb der Welle 17 befinden. Die Stützhaken 18 nehmen daher die auf das Kupplungsglied 7 wirkende Stützlast problemlos auf, wobei sie ausschließlich in radialer Richtung belastet sind. Außerdem weisen die Stützhaken 18 eine Hinterschneidung 23 auf, um einem versehentlichen Entriegeln der Verriegelungsmittel 16 vorzubergen.

Am Kupplungsglied 7 ist oberseitig ein Widerlager 24 vorgesehen, welches in der in Figur 3 dargestellten Verriegelungslage vom Sperrhaken 19 hintergriffen ist. Das Widerlager 24 und der Sperrhaken 19 weisen Hinterschneidungen 25 auf, die ebenfalls zur Verbesserung der Sicherheit der Verriegelungsmittel 16 beitragen.

Um die Welle 17 in die in Figur 2 dargestellte Lösestellung zu überführen, ist es notwendig, den Schwenkarm 9 zunächst mit Hilfe der nicht dargestellten Hydraulikzylinder geringfügig anzuheben und das Kupplungsglied 7 mit dem Hydraulikzylinder 13 zurückzuziehen. Damit sind die Hinterschneidungen 23, 25 der Stütz- 18 und Sperrhaken 19 freigegeben. Durch das anschließende Absenken des Schwenkarms 9 ergibt sich eine zuverlässige Verriegelung der Anhängerkupplung 1.

Grundsätzlich sollten sich die Verriegelungsmittel 16 in der in Figur 2 dargestellten Lösestellung befinden, wenn der Schwenkarm 9 bzw. das Kupplungsglied 7 aus der Ankuppelstellung in die Transportstellung überführt werden. Falls dies jedoch nicht der Fall sein sollte, sorgt das sich zurückziehende Kupplungsglied 7 mit einer Schrägfläche 7a dafür, daß der Sperrhaken 19 im Uhrzeigersinn verschwenkt wird. Mit zunehmender Verstellung des Kupplungsglieds 7 wird die Welle 17 demnach in die in Figur 2 dargestellte Lösestellung überführt. Insbesondere ist daran gedacht, die Schrägfläche 7a des Kupplungsglieds 7 mit einer Gleitschicht zu belegen, um die Reibungswirkung mit dem Sperrhaken 19 zu reduzieren.

Um die Verriegelungsvorrichtung 16 in der Ankuppelstellung der Anhängerkupplung 1 sicher in der in Figur 2 dargestellten Lösestellung zu halten, ist daran gedacht, dem Verriegelungsmittel 16 eine Arretiervorrichtung 26 zuzuordnen, die anhand der Detaildarstellung gemäß Figur 4 erläutert wird. In Figur 4 ist der Sperrhaken 19 mit der Welle 7 dargestellt, ohne die Stützhaken 18, die Federn 20 bzw. die Wangen 6 zu zeigen. Dem Sperrhaken 19 ist ein Stift 27 zugeordnet, der mit einem axial federnden Querfortsatz 28 in eine kulissenartige Vertiefung 29 des Sperrhakens 19 eingreift. Die Vertiefung 29 ist dabei in einem ersten Teilbereich 30 vertikal ausgerichtet, während sie in einem zweiten Teilbereich 31 konzentrisch zur Welle 7 verläuft. Der Stab 27 ist federnd nach unten vorgespannt, wobei sein freies Ende 32 gegen die Schrägfläche 7a des Kupplungsglieds 7 drückt. Die Schrägfläche 7a drückt den Stift 27 vertikal nach oben, so daß sich der Querfortsatz 28 entlang der Kulisse 29 verstellt.

Sobald der Stift 27 nahe dem höchsten Punkt des Kupplungsglieds 7 kommt, befindet sich der Querfortsatz 28 des Stiftes 27 im zweiten Teilbereich 31 der Kulisse 29. Aufgrund der besonderen Formgebung der Kulisse 29 im zweiten Teilbereich 31 kann der Querfortsatz 28 den Sperrhaken 19 nicht mehr arretieren, so daß dieser aufgrund seiner Vorspannung durch die Drehfedern 20 in die Verriegelungsstellung überführt wird. Die Form der Kulisse 29 wird dabei so gewählt, daß ein freies Ende 33 des Sperrhakens 19 zu diesem Zeitpunkt auf einer oberen Endfläche 7b des Kupplungsglieds 7 zu liegen kommt. Die Arretiervorrichtung 26 bewirkt insbesondere, daß die Anhängerkupplung 1 bei Überführung von der Ankuppel- in die Transportstellung automatisch verriegelt wird.

### Bezugszeichenliste

- 1: Anhängerkupplung
- 2: Rahmen
- 3: Verbindungsplatte
- 4: Bohrung
- 5: heckseitiges Ende des Rahmens
- 6: Wange
- 7: Kupplungsglied
- 7a: Schrägfläche
- 7b: obere Endfläche
- 8: Achse
- 9: Schwenkarm
- 10: Haltebolzen
- 11: Bolzen
- 12: Schiebeschlitten
- 12a: Gummipuffer
- 12b: Schraubbolzen
- 13: Hydraulikzylinder
- 14: Backe
- 15: Kolbenstange
- 16: Verriegelungsglied
- 17: Welle
- 18: Stützhaken
- 19: Sperrhaken
- 20: Drehfeder
- 21: Bowdenzug
- 22: Fortsatz
- 23: Hinterschneidung
- 24: Widerlager
- 25: Hinterschneidung
- 26: Arretiervorrichtung
- 27: Stift
- 28: Querfortsatz
- 29: Vertiefung
- 30, 31: Teilbereich
- 32: freies Ende des Stifts
- 33: freies Ende des Sperrbolzens

## Patentansprüche

1. Anhängerkupplung für ein Fahrzeug, insbesondere für einen Ackerschlepper, wobei die Anhängerkupplung (1) einen fahrzeugfesten Rahmen (2) aufweist, an dem ein nach hinten gerichteter Schwenkarm (9) zwischen einer abgesenkten Ankuppelstellung und einer angehobenen Transportstellung verschwenkbar gehalten ist, und am Schwenkarm (9) ein Kupplungsglied (7) verschiebbar abgestützt ist, wobei die Anhängerkupplung (1) Verriegelungsmittel (16) zum Arretieren des Kupplungsglieds (7) in der Transportstellung aufweist, **dadurch gekennzeichnet, daß** die Verriegelungsmittel (16) von mindestens einem Stütz- (18) und Sperrhaken (19) gebildet sind, die gemeinsam auf einer am Rahmen (2) abgestützten Welle (17) zwischen einer Verriegelungs- und einer Lösestellung verschwenkbar sind, wobei in der Verriegelungsstellung der mindestens eine Stützhaken (18) einen Fortsatz (22) des Schwenkarms (9) und/oder Kupplungsglieds (7) untergreift, und der mindestens eine Sperrhaken (19) mindestens ein Widerlager (24) des Kupplungsglieds (7) hintergreift.

2. Anhängerkupplung nach Anspruch 1, **dadurch gekennzeichnet, daß** der mindestens eine Fortsatz (22) im wesentlichen unterhalb der Welle (17) und/oder das mindestens eine Widerlager (24) im wesentlichen hinter der Welle (17) vorgesehen ist/sind.

3. Anhängerkupplung nach Anspruch 1 oder 2, **dadurch gekennzeichnet, daß** der mindestens eine Stütz- (18) und/oder Sperrhaken (19) die Welle (17) in der Verriegelungsstellung arretierende Hinterschneidungen (23, 25) aufweisen.

4. Anhängerkupplung nach mindestens einem der Ansprüche 1 bis 3, **dadurch gekennzeichnet, daß** das Kupplungsglied (7) federnd gegen den mindestens einen Stütz- (18) und/oder Sperrhaken (19) vorgespannt ist.

5. Anhängerkupplung nach mindestens einem der Ansprüche 1 bis 4, **dadurch gekennzeichnet, daß** der Schwenkarm (9) im Bereich seiner Schwenkachse (8) mindestens einen einstellbaren Anschlag (12b) für das Kupplungsglied (7) aufweist.

6. Anhängerkupplung nach mindestens einem der Ansprüche 1 bis 5, **dadurch gekennzeichnet, daß** die Welle (17) federnd gegen die Verriegelungsstellung vorgespannt ist und/oder mit einem Bowdenzug (21) in Wirkverbindung steht.

7. Anhängerkupplung nach mindestens einem der Ansprüche 1 bis 6, **dadurch gekennzeichnet, daß** die Welle (17) in der Lösestellung durch einen Stift (27) arretierbar ist, welcher über ein Getriebe (7a, 32) mit dem Kupplungsglied (7) verbunden ist, so daß bei dessen Zurückziehen in den Schwenkarm (9) die Arretierung der Welle (17) gelöst ist.

8. Anhängerkupplung nach Anspruch 7, **dadurch gekennzeichnet, daß** das Getriebe (7a, 32) von einer am Kupplungsglied (7) vorgesehenen Keilfläche (7a) gebildet ist, gegen die der Stift (27) federnd vorgespannt ist, der in seiner Arretierstellung eine Anschlagfläche (29) des mindestens einen Stütz- (28) und/oder Sperrhakens (19) hintergreift.

9. Anhängerkupplung nach mindestens einem der Ansprüche 1 bis 8, **dadurch gekennzeichnet, daß** im Kupplungsglied (7) eine die Welle (17) beim Zurückziehen des Kupplungsglieds (7) in die Lösestellung verschwenkende Schrägfläche (7a) vorgesehen ist, welche mit dem Sperrhaken (19) zusammenwirkt und die Schrägfläche (7a) bevorzugt mit einem Gleitbelag versehen ist.

10. Anhängerkupplung nach mindestens einem der Ansprüche 1 bis 9, **dadurch gekennzeichnet, daß** die Welle (17) mit einem die Verriegelungsstellung anzeigenden Kontrollstift in Wirkverbindung steht.

## Claims

1. Trailer hitch for a vehicle, in particular for a tractor, the trailer hitch (1) having a frame (2) which is fixed on the vehicle and on which a rearwardly directed pivoting arm (9) is held in a manner such that it can be pivoted between a lowered coupling-on position and a raised transporting position, and a coupling element (7) being supported displaceably on the pivoting arm (9), the trailer hitch (1) having locking means (16) for retaining the coupling element (7) in the transporting position, **characterized in that** the locking means (16) are formed by at least one supporting hook (18) and locking hook (19) which can be pivoted together between a locking position and a release position on a shaft (17) supported on the frame (2), in the locking position the at least one supporting hook (18) engaging under an extension (22) of the pivoting arm (9) and/or of the coupling element (7), and the at least one locking hook (19) reaching behind at least one abutment (24) of the coupling element (7).

2. Trailer hitch according to Claim 1, **characterized in that** the at least one extension (22) is provided essentially below the shaft (17) and/or the at least one abutment (24) is provided essentially behind the shaft (17).

3. Trailer hitch according to Claim 1 or 2, **characterized in that** the at least one supporting hook (18) and/or locking hook (19) have undercuts (23, 25) retaining the shaft (17) in the locking position.

4. Trailer hitch according to at least one of Claims 1 to 3, **characterized in that** the coupling element (7) is prestressed resiliently towards the at least one supporting hook (18) and/or locking hook (19).

5. Trailer hitch according to at least one of the Claims 1 to 4, **characterized in that** the pivoting arm (9) has, in the region of its pivot axis (8), at least one adjustable stop (12b) for the coupling element (7).

6. Trailer hitch according to at least one of Claims 1 to 5, **characterized in that** the shaft (17) is prestressed resiliently towards the locking position and/or is in operative connection to a Bowden cable (21).

7. Trailer hitch according to at least one of Claims 1 to 6, **characterized in that** the shaft (17) can be retained in the release position by means of a pin (27) which is coupled via a mechanism (7a, 32) to the coupling element (7), so that when the latter is pulled back into the pivoting arm (9) the retention of the shaft (17) is released.

8. Trailer hitch according to Claim 7, **characterized in that** the mechanism (7a, 32) is formed by a wedge surface (7a), which is provided on the coupling element (7) and towards which the pin (27) is resiliently prestressed, the pin, in its retaining position, reaching behind a stop surface (29) of the at least one supporting hook (28) and/or locking hook (19).

9. Trailer hitch according to at least one of Claims 1 to 8, **characterized in that** an oblique surface (7a) which pivots the shaft (17) into the release position when the coupling element (7) is pulled back is provided in the coupling element (7) and interacts with the locking hook (19), and the oblique surface (7a) is preferably provided with an antifriction coating.

10. Trailer hitch according to at least one of Claims 1 to 9, **characterized in that** the shaft (17) is operatively connected to a control pin indicating the locking position.

## Revendications

1. Dispositif d'attelage pour un véhicule, en particulier pour un tracteur agricole, dans lequel le dispositif d'attelage (1) comporte un châssis (2) fixé sur le véhicule, sur lequel un bras pivotant (9) orienté vers l'arrière est maintenu de manière pivotante entre une position d'attelage abaissée et une position de transport relevée, et un organe de couplage (7) est supporté de manière coulissante sur le bras pivotant (9), dans lequel le dispositif d'attelage (1) présente des moyens de verrouillage (16) pour bloquer l'organe de couplage (7) dans la position de transport, **caractérisé en ce que** les moyens de verrouillage (16) sont formés par au moins un crochet d'appui (18) et de blocage (19), qui sont capables de pivoter ensemble entre une position de verrouillage et une position de détachement sur un arbre (17) supporté sur le châssis (2), le au moins un crochet d'appui (18) saisissant par le dessous un prolongement (22) du bras pivotant (9) et/ou de l'organe de couplage (7), et le au moins un crochet de blocage (19) saisissant par l'arrière au moins une butée (24) de l'organe de couplage (7), dans position de verrouillage.

2. Dispositif d'attelage selon la revendication 1, **caractérisé en ce que** le au moins un prolongement (22) est prévu sensiblement au-dessous de l'arbre (17) et/ou la au moins une butée (24) sensiblement derrière l'arbre (17).

3. Dispositif d'attelage selon la revendication 1 ou 2, **caractérisé en ce que** le au moins un crochet d'appui (18) et/ou de blocage (19) présentent des contre-dépouilles (23, 25) bloquant l'arbre (17) dans la position de verrouillage.

4. Dispositif d'attelage selon au moins l'une des revendications 1 à 3, **caractérisé en ce que** l'organe de couplage (7) est précontraint élastiquement contre le au moins un crochet d'appui (18) et/ou de blocage (19).

5. Dispositif d'attelage selon au moins l'une des revendications 1 à 4, **caractérisé en ce que** le bras pivotant (9) présente dans la zone de son axe de pivotement (8) au moins une butée (12b) réglable pour l'organe de couplage (7).

6. Dispositif d'attelage selon au moins l'une des revendications 1 à 5, **caractérisé en ce que** l'arbre (17) est précontraint élastiquement contre la position de verrouillage et/ou est en liaison active avec un câble Bowden (21).

7. Dispositif d'attelage selon au moins l'une des revendications 1 à 6, **caractérisé en ce que** l'arbre (17) peut être bloqué dans la position de détachement par une goupille (27) qui est reliée par une transmission (7a, 32) à l'organe de couplage (7), de sorte que lors de son retrait dans le bras pivotant (9) le blocage de l'arbre (17) est détaché.

8. Dispositif d'attelage selon la revendication 7, **caractérisé en ce que** la transmission (7a, 32) est formée par une surface en coin (7a) contre laquelle la goupille (27) est précontrainte élastiquement, qui dans sa position de blocage saisit par l'arrière une surface de butée du au moins un crochet d'appui (28) et/ou de blocage (19).

9. Dispositif d'attelage selon au moins l'une des revendications 1 à 8, **caractérisé en ce que** dans l'organe de couplage (7) est prévue une surface inclinée (7a) faisant pivoter l'arbre (17) dans la position de détachement lors du retrait de l'organe de couplage (7), qui coopère avec le crochet de blocage (19) et la surface inclinée (7a) est de préférence pourvue d'une garniture de glissement.

10. Dispositif d'attelage selon au moins l'une des revendications 1 à 9, **caractérisé en ce que** l'arbre (17) est en liaison active avec une goupille de contrôle indiquant la position de verrouillage.
